# EUROPÄISCHE PATENTSCHRIFT

(11) **EP 1 593 330 B1**
(45) Veröffentlichungstag und Bekanntmachung des Hinweises auf die Patenterteilung: **24.06.2009**
(21) Anmeldenummer: 05405280.8
(22) Anmeldetag: 04.04.2005
(51) Int. Cl.: A47J 31/44

(54) **Verfahren und Vorrichtung zur Erzeugung von Milchschaum oder von warmen Milchgetränken**
Method and apparatus to produce foamed milk or warm milk beverages
Procédé et appareil pour la production de mousse de lait ou de boissons chaudes à base de lait

(30) Priorität: 13.04.2004 CH 6652004
(43) Veröffentlichungstag der Anmeldung: 09.11.2005
(73) Patentinhaber: Steiner AG Weggis, 6353 Weggis (CH)
(72) Erfinder: Dirren, Francoise, 1950 Sion (CH)
(74) Vertreter: Luchs, Willi

(56) Entgegenhaltungen:
- EP-A- 0 157 069
- EP-A2- 1 256 299

## Beschreibung

Die Erfindung betrifft ein Verfahren zur Erzeugung von Milchschaum oder von warmen Milchgetränken gemäss dem Oberbegriff des Anspruches 1 sowie eine Vorrichtung zum Durchführen des Verfahrens.

Aus der EP-A 0 600 826 ist eine Vorrichtung zur Erzeugung von Milchschaum bekannt, bei welcher die Milch in einen Behälter eingefüllt und darin erhitzt wird, wonach die erhitzte Milch mittels einer Pumpe über eine Ansaugleitung angesaugt und dabei der erhitzten Milch Luft in regelbarer Menge beigemischt wird. Mittels der Pumpe wird dann die Milch bzw. das Milch/Luft-Gemisch durch ein Widerstandsdurchlasselement zu einem Auslass gefördert. Der Behälter, in welchem die Milch erhitzt wird, muss wegen den sich bildenden Rückständen regelmässig gereinigt werden. Auch das im Aufbau relativ komplizierte Widerstandsdurchlasselement bedarf einer sorgfältigen und ziemlich umständlichen Reinigung.

EP 0 157 069 offenbart eine ähnliche Vorrichtung mit einem Durchlauferhitzer.

Der vorliegenden Erfindung liegt die Aufgabe zugrunde, ein Verfahren der eingangs genannten Art vorzuschlagen sowie eine einfache und kostengünstige Vorrichtung zum Durchführen des Verfahrens zu schaffen, die einen einfachen Betrieb und Unterhalt ermöglichen.

Diese Aufgabe wird erfindungsgemäss durch ein Verfahren mit den Merkmalen des Anspruches 1 sowie durch eine Vorrichtung mit den Merkmalen des Anspruches 3 gelöst.

Weitere bevorzugte Ausgestaltungen des erfindungsgemässen Verfahrens und der erfindungsgemässen Vorrichtung bilden den Gegenstand der abhängigen Ansprüche.

Dadurch, dass die Milch nicht in einem speziellen Behälter erhitzt sondern beim Ansaugen durch einen Durchlauferhitzer geleitet und dabei erhitzt wird, kann die Milch im kalten Zustand praktisch aus jedem Behälter direkt angesaugt werden, ohne dass sie in den speziellen Behälter für das Erhitzen umgefüllt werden muss. Der Behälter kann nach Verbrauch der Milch einfach ersetzt werden. Handelt es sich um einen nachfüllbaren Behälter, so ist seine Reinigung einfach, da die durch das Erhitzen verursachten Rückstände wegfallen.

Ein weiterer Vorteil besteht darin, dass kein teures und im Unterhalt aufwendiges Widerstandsdurchlasselement benötigt wird, sondern die erhitzte Milch bzw. das Milch/Luft(Gas)-Gemisch lediglich über eine Drosselstelle zum Auslass gefördert werden kann. Der Durchlauferhitzer kann problemlos gereinigt werden.

In einer besonders bevorzugten Weise wird die Luft der kalten Milch, vor dem Eintritt in den Durchlauferhitzer, beigemischt und das Milch/Luft- bzw. Gas-Gemisch im Durchlauferhitzer auf eine gewünschte, einstellbare Temperatur erwärmt, wodurch eine hervorragende Milchschaumqualität erreicht wird. Besonders vorteilhaft ist auch die Verwendung eines einstellbaren Drosselventils an der Drosselstelle, mit dem der Druck je nach Bedürfnissen eingestellt werden kann.

Die Erfindung wird nachfolgend anhand der Zeichnung näher erläutert. Es zeigt:
- Fig. 1: schematisch eine erfindungsgemässe Vorrichtung zur Erzeugung von Milchschaum oder von warmen Milchgetränken;
- Fig. 2: in einer Explosionsdarstellung ein Ausführungsbeispiel eines Durchlauferhitzers für die Vorrichtung nach Fig. 1;
- Fig. 3: einen Teil des Durchlauferhitzers nach Fig. 2 in perspektivischer Darstellung;
- Fig. 4: in perspektivischer Darstellung den Durchlauferhitzer nach Fig. 2 im montierten Zustand; und
- Fig. 5: in perspektivischer Darstellung den zusammenmontierten Durchlauferhitzer mit der gemäss Fig. 4 unteren Seite nach oben.

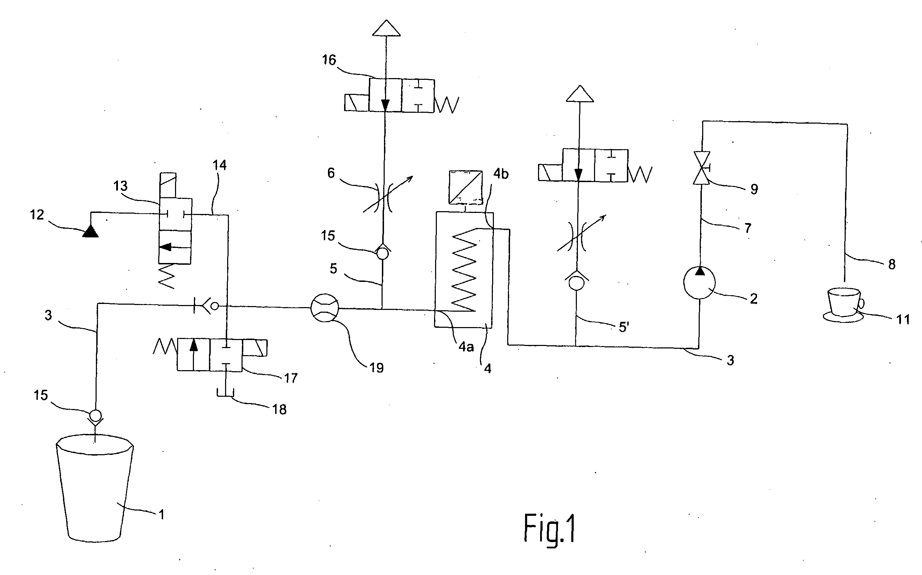

Fig. 1 zeigt einen Behälter 1 mit Milch, die allenfalls nach Wunsch auch verschiedene Zusätze wie Schokolade, Vanille etc. enthalten kann. Die kalte Milch wird mittels einer Pumpe 2 über eine Ansaugleitung 3 vom Behälter 1 angesaugt, wobei sie einen Durchlauferhitzer 4 durchläuft und in diesem erhitzt wird. Der Eintritt in den Durchlauferhitzer 4 ist in Fig. 1 mit 4a, der Austritt mit 4b bezeichnet.

Vor dem Eintritt 4a in den Durchlauferhitzer 4 mündet in die Ansaugeleitung 3 eine Luftzufuhrleitung 5, der ein einstellbarer Luftmengenregler 6 zugeordnet ist. Es könnte aber auch eine fixe Düse anstelle dieses Reglers 6 verwendet werden. Über die Luftzufuhrleitung 5 kann der Milch eine bestimmte Menge Luft beigemischt werden, wobei dann das Milch/Luft-Gemisch (oder die Milch allein) von der Pumpe 2 angesaugt und im Durchlauferhitzer 4 erhitzt wird. Im Prinzip könnte anstelle von Luft auch ein Gasgemisch verwendet werden.

Es ist ferner bei der Luftzufuhrleitung 5 ein Betätigungsventil 16 vorgesehen, mittels dem die Luftzufuhr unterbunden werden kann, insbesondere wenn beabsichtigt ist, nur heisse Milch ohne Schaum zu erzeugen und herauszulassen. Die Luftzufuhrleitung 5' mit den entsprechenden Ventilen könnte im Prinzip auch nach dem Durchlauferhitzer angeordnet sein, wie dies strichpunktiert dargestellt ist.

Im Durchlauferhitzer 4 wird die Milch bzw. das Milch/Luft-Gemisch durch eine wendel- oder andersförmig angeordnete Leitung geführt und mittels eines Heizelementes, welches unterschiedlich bspw. als Widerstandselement ausgestaltet sein kann, erhitzt. Die Temperatur des Heizelementes kann mit Vorteil geregelt werden, wodurch am Austritt 4b die gewünschte Temperatur der Milch bzw. des Milch/Luft-Gemisches eingestellt werden kann.

Mittels der Pumpe 2 wird dann die Milch bzw. das Milch/Luft-Gemisch durch eine Auslassleitung 7 zu einem Auslass 8 gepumpt, und zwar über eine Drosselstelle, die entweder als ein einstellbares Drosselventil 9 oder auch fix ausgebildet werden kann, und die einen Überdruck im hydraulischen System bewirkt. Mit dem einstellbaren Drosselventil 9 kann vorzugsweise Druck zwischen 0 und 15 bar eingestellt werden. Der erzeugte Milchschaum oder die warme Milch bzw. das warme Milchgetränk wird in einem Behälter 11, beispielsweise einer Tasse, aufgefangen.

Zur Reinigung des Durchlauferhitzers 4 und der entsprechenden Leitungen kann Reinigungsflüssigkeit von einer Quelle 12 über ein Reinigungsventil 13 und eine Leitung 14 in die Ansaugeleitung 3 eingeleitet und mittels der Pumpe 2 in die Auslassleitung 7 gepumpt werden. Die Reinigung des Durchlauferhitzers 4 ist dabei wesentlich einfacher als die Reinigung eines herkömmlichen Widerstandsdurchlasselementes. Vorteilhaft wird nach jedem Milchdurchlass eine bestimmte Menge Wasser durch die Leitung 3 gepumpt, so dass ein Ansetzen von Milchresten insbesondere im Durchlauferhitzer 4 vermieden werden kann.

Dadurch, dass erfindungsgemäss die Milch nicht wie bisher in einem speziellen Behälter erhitzt sondern über den Durchlauferhitzer 4 angesaugt und in diesem erwärmt wird, kann die Milch im kalten Zustand praktisch aus jedem Behälter 1 direkt angesaugt werden, ohne dass sie in den speziellen Behälter für das Erhitzen umgefüllt werden muss. Der Behälter 1 kann nach Verbrauch der Milch einfach ersetzt werden. Handelt es sich um einen nachfüllbaren Behälter, so ist seine Reinigung einfach, da die durch das Erhitzen verursachten Rückstände wegfallen. Ein weiterer Vorteil besteht darin, dass kein teuerer und im Unterhalt aufwendiger Widerstandsdurchlasselement benötigt wird.

Die zur Erzeugung von Milchschaum notwendige Luft (es könnte auch ein Gas sein) könnte der Milch auch erst nach dem Austritt 4b aus dem Durchlauferhitzer 4 beigemischt werden. Die Beimischung der Luft der kalten Milch, vor dem Eintritt in den Durchlauferhitzer 4, ist jedoch vom besonderen Vorteil, da das Milch/Luft-Gemisch im Durchlauferhitzer 4 kontrolliert auf eine gewünschte, einstellbare Temperatur erwärmt werden kann, wodurch eine hervorragende Milchschaumqualität erreicht wird. Besonders vorteilhaft ist auch die Verwendung des einstellbaren Drosselventils 9 an der Drosselstelle, mit dem der Druck je nach Bedürfnissen eingestellt werden kann.

Ferner ist am Anfang der Ansaugleitung 3 noch ein als Zweiwegventil ausgebildetes Ventil 17 mit einem Auffangbehälter oder einem Ablauf 18 angeordnet, durch welches eine Entleerung des Wassers in der Ansaugleitung 3 ermöglicht wird. Verschiedene Rückschlagventile 15 im System verhindern ein Zurücklaufen der Milch bzw. der Luft oder des Gases.

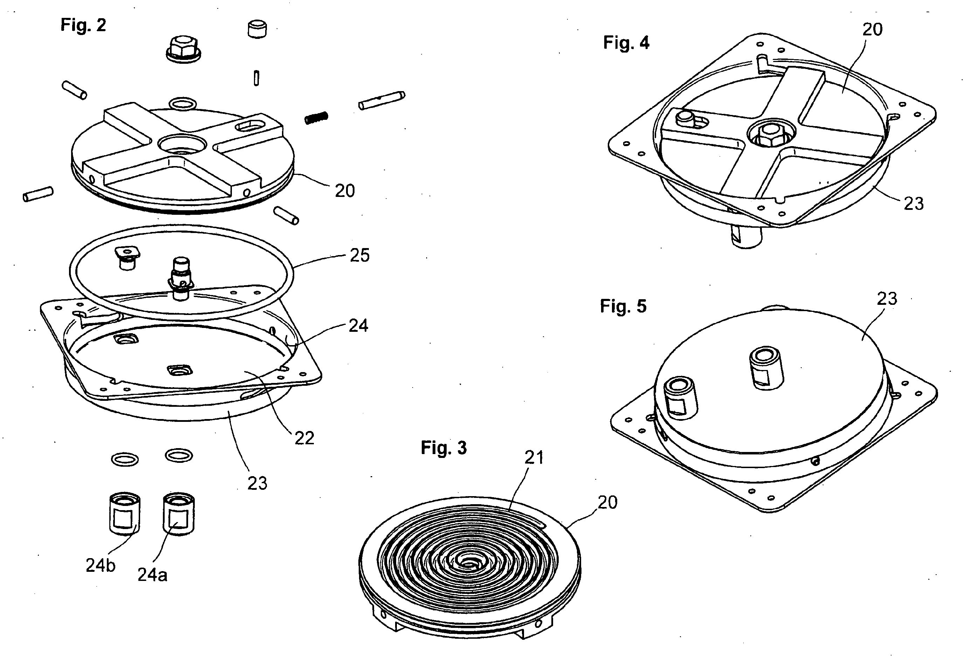

In Fig. 2 bis 5 ist eine besonders vorteilhafte Ausführungsform des Durchlauferhitzers 4 dargestellt, bei welchem die Milch bzw. das Milch/Luft-Gemisch durch einen spiralförmigen Kanal geführt wird, welcher zwischen einer insbesondere aus Fig. 3 ersichtlichen und stirnseitig mit einer spiralförmigen Nut 21 versehenen Labyrinthscheibe 20 und einer stirnseitigen Heizfläche 22 eines Heizelementes 23 gebildet ist. Die stirnseitigen Heizfläche 22 bildet einen Teil einer Vertiefung 24 im Heizelement 23, in welche die Labyrinthscheibe 20 mit der spiralförmigen Nut 21 nach unten dichtend eingesetzt wird (ein Dichtungsring 25 ist aus Fig. 2 ersichtlich, in welcher auch die bajonettartige Verbindungsart Labyrinthscheibe 20/Heizelement 23 angedeutet ist).

Der spiralförmige Kanal wird beim Einsetzen der Labyrinthscheibe 20 in die Vertiefung 24 mit Anschlussstücken 24a, 24b dichtend verbunden, die dem Heizelement 23 zugeordnet sind, und von denen das zentral angeordnete Anschlussstück 24a vorzugsweise den Eintritt 4a und das dem äusseren Ende der Nut 21 zugeordnete Anschlussstück 24b den Austritt 4b oder umgekehrt für die Milch bzw. das Milch/Luft-Gemisch bildet.

Es wäre durchaus möglich, die spiralförmige Nut im Heizelement vorzusehen und diese durch eine flache Scheibe abzudecken, um den spiralförmigen Kanal zu bilden. Denkbar wäre auch ein durch spiralförmige Nuten in beiden Durchlauferhitzer-Teilen (Labyrinthscheibe, Heizelement) gebildeter Kanal. Auch könnten die den Ein- und Austritt für die Milch bzw. das Milch/Luft-Gemisch bildenden Anschlussstücke statt im Heizelement in der Abdeck- bzw. Labyrinthscheibe angeordnet sein. Schliesslich könnten die beiden zusammen den spiralförmigen Kanal bildenden Durchlauferhitzer-Teile durchaus eine andere Aussenform aufweisen, als in Fig. 2 bis 5 dargestellt.

## Patentansprüche

1. Verfahren zur Erzeugung von Milchschaum oder von warmen Milchgetränken, bei welchem Milch mittels einer Pumpe (2) aus einem Behälter (1) angesaugt und zu einem Auslass (8) gefördert wird, wobei die Milch erhitzt und ihr Luft bzw. ein Gas in regelbarer Menge beigemischt werden kann, **dadurch gekennzeichnet, dass**
die Milch beim Ansaugen durch einen Durchlauferhitzer (4) geleitet und dabei erhitzt wird, wonach sie über eine Drosselstelle (9) zum Auslass (8) gefördert wird.

2. Verfahren nach Anspruch 1, **dadurch gekennzeichnet, dass** die Luft der kalten Milch vor dem Eintritt (4a) in den Durchlauferhitzer (4) oder der erhitzten Milch nach dem Austritt (4b) aus dem Durchlauferhitzer (4) in regelbarer Menge beigemischt wird.

3. Vorrichtung zum Durchführen des Verfahrens nach Anspruch 1, mit einer die Milch von einem Behälter (1) über eine Ansaugleitung (3) ansaugenden Pumpe (2), mit einer von der Pumpe (2) zu einem Auslass (8) führenden Auslassleitung (7), und mit einer in eine dieser Leitungen (3, 7) mündenden, an einen Luftmengenregler (6) oder direkt angeschlossenen Luftzufuhrleitung (5), **dadurch gekennzeichnet, dass**
ein Durchlauferhitzer (4) mit einem Eintritt (4a) einerseits und einem Austritt (4b) anderseits in die Ansaugeleitung (3) eingeschaltet ist und der Auslassleitung (7) eine Drosselstelle (9) zugeordnet ist.

4. Vorrichtung nach Anspruch 3, **dadurch gekennzeichnet, dass** die Luftzufuhrleitung (5) vor dem Eintritt (4a) in den Durchlauferhitzer (4) oder nach dessen Austritt (4b) in die Ansaugleitung (3) mündet.

5. Vorrichtung nach Anspruch 3 oder 4, **dadurch gekennzeichnet, dass** der Durchlauferhitzer (4) labyrinthartig ausgebildet und mit einem Heizelement ausgestattet ist, dessen Temperatur regelbar ist, wodurch die Temperatur der Milch oder des Milch/Luft-Gemisches am Austritt (4b) aus dem Durchlauferhitzer (4) einstellbar ist.

6. Vorrichtung nach einem der Ansprüche 3 bis 5, **dadurch gekennzeichnet, dass** die Drosselstelle durch ein Drosselventil (9) oder eine fixe Düse gebildet ist.

7. Vorrichtung nach Anspruch 6, **dadurch gekennzeichnet, dass** das Drosselventil (9) einstellbar ist.

## Claims

1. Method for producing milk foam or warm milk drinks, where milk is suctioned from a container (1) by means of a pump (2) and conveyed to an outlet (8), whereby the milk is heated and a controllable quantity of air, i.e. gas can be added to the same, **characterised in that** the milk is routed through a continuous-flow heater (4) during suctioning and is thereby heated, whereafter the same is conveyed via a throttle point (9) to an outlet (8).

2. Method according to Claim 1, **characterised in that** the air is added to the cold milk prior to the inlet (4a) into the continuous-flow heater (4) or to the heated milk after the outlet (4b) from the continuous-flow heater (4) in a controllable quantity.

3. Device for applying the method according to Claim 1, with a pump (2) suctioning the milk from a container (1) via a suction line (3), with an outlet line (7) leading from the pump (2) to an outlet (8), and with an air supply line (5) connected to an air quantity controller (6) or directly connected, opening into one of these lines (3, 7), **characterised in that** a continuous-flow heater (4) with an inlet (4a) on one side and an outlet (4b) on the other is located in the suction line (3), and **in that** a throttle point (9) is associated with the outlet line (7).

4. Device according to Claim 3, **characterised in that** the air supply line (5) opens into the suction line (3) prior to the inlet (4a) into the continuous-flow heater (4) or after the outlet (4b) of the same.

5. Device according to Claim 3 or 4, **characterised in that** the continuous-flow heater (4) takes a labyrinth form and is equipped with a heater element whose temperature is controllable, so that the temperature of the milk or the milk/air mixture at the outlet (4b) of the continuous-flow heater (4) can be adjusted.

6. Device according to one of the Claims 3 to 5, **characterised in that** the throttle point is formed by a throttle valve (9) or a fixed nozzle.

7. Device according to Claim 6, **characterised in that** the throttle valve (9) is adjustable.

## Revendications

1. Procédé de production de mousse de lait ou de boissons au lait chaud, dans lequel du lait est aspiré au moyen d'une pompe (2) à partir d'un récipient (1) et amené à une sortie (8), dans lequel le lait est chauffé et il est possible de lui adjoindre de l'air ou un gaz en quantité réglable, **caractérisé en ce que** lors de l'aspiration, le lait est guidé à travers un chauffe-lait (4) et en même temps chauffé, après quoi il est amené à la sortie (8) en passant par un étranglement (9).

2. Procédé selon la revendication 1, **caractérisé en ce que** l'air est adjoint en quantité réglable au lait froid avant l'entrée (4a) dans le chauffe-lait (4) ou bien au lait chauffé après la sortie (4b) du chauffe-lait (4).

3. Dispositif pour réaliser le procédé selon la revendication 1, avec une pompe (2) aspirant le lait à partir d'un récipient (1) par l'intermédiaire d'une conduite d'aspiration (3), avec une conduite de sortie (7) menant de la pompe (2) à une sortie (8), et avec une conduite d'amenée d'air (5) débouchant sur l'une de ces conduites (3, 7) étant raccordée à un régulateur de volume d'air (6) ou directement, **caractérisé en ce qu'**un chauffe-lait (4) avec une entrée (4a) d'une part et une sortie (4b) d'autre part est inséré dans la conduite d'aspiration (3) et un étranglement (9) est attribué à la conduite de sortie (7).

4. Dispositif selon la revendication 3, **caractérisé en ce que** la conduite d'amenée d'air (5) débouche avant l'entrée (4a) dans le chauffe-lait (4) ou dans la conduite d'aspiration (3) après la sortie (4b) de celui-ci.

5. Dispositif selon la revendication 3 ou 4, **caractérisé en ce que** le chauffe-lait (4) est réalisé à la manière d'un labyrinthe et est équipé d'un élément chauffant dont la température est réglable, de sorte que la température du lait ou du mélange lait/air peut être réglée à la sortie (4b) du chauffe-lait (4).

6. Dispositif selon l'une quelconque des revendications 3 à 5, **caractérisé en ce que** l'étranglement est formé par une vanne d'étranglement (9) ou par une buse fixe.

7. Dispositif selon la revendication 6, **caractérisé en ce que** la vanne d'étranglement (9) est réglable.
